# EUROPEAN PATENT APPLICATION

(11) **EP 2 052 629 A1**
(43) Date of publication of application: **29.04.2009**
(21) Application number: 07745415.5
(22) Date of filing: 15.06.2007
(51) Int. Cl.: A23L 1/22, A23L 1/238

(54) **SOY SAUCE SEASONING HAVING HIGH -AMINOBUTYRIC ACID CONTENT**

(30) Priority: 16.06.2006 JP 2006166846
(71) Applicant: Kikkoman Corporation, Noda-shi, Chiba278-8601 (JP)
(72) Inventor: SHIMOJO, Ryo, Chiba 278-8601 (JP)
(74) Representative: Kramer - Barske - Schmidtchen
(86) International application number: PCT/JP2007/062161
(87) International publication number: WO 2007/145334

(57) **Abstract**

A γ-aminobutyric acid-containing soy sauce seasoning with stabilized qualities such as color and gloss, deliciousness, γ-aminobutyric acid content and the like can be obtained by adjusting pH within a certain range when γ-aminobutyric acid is contained in a soy sauce seasoning at a high concentration.

## Description

### TECHNICAL FIELD

The present invention relates to a soy sauce seasoning having high γ-aminobutyric acid content, in which qualities such as color and gloss, deliciousness, γ-aminobutyric acid content and the like are stabilized.

### BACKGROUND OF THE INVENTION

With the increasing national consciousness on health, concern has been concentrated in the improvement of daily living customs, particularly dietary life. Based on such background, articles containing physiologically functional components having healthy functions such as healthy food, supplements and the like food have been broadly popularized. Particularly, food for specified health uses have been received by the market with high reliability as food articles which were examined and permitted by the Ministry of Health, Labor and Welfare on their effects and efficacies.

γ-Aminobutyric acid is an amino acid broadly distributed in the animal and plant kingdom and is a neurotransmitter which is present in the brain and spinal cord of mammals. As the function of γ-aminobutyric acid, effects such as hypotensive activity, diabetes mellitus preventive and diabetes mellitus improving activities, renal function activating activity, liver function improving activity, obesity preventive activity, climacteric disturbance improving activity and indefinite complaint improving activity, sleeplessness improving and ataractic and lenitive activities, improving activity of disturbance of memory, deodorization activity and the like have been confirmed by animal tests and human clinical tests. Particularly, regarding the hypotensive activity of γ-aminobutyric acid, there are articles of food for specified health uses which are permitted to use the expression that they are fitted for persons having a little high blood pressure, and which are physiologically functional components which draws special attention in recent years (e.g., see Non-patent Reference 1).

Examples of the soy sauce which contains γ-aminobutyric acid include an article of fermented food prepared by adding *Lactobacillus plantarum* to fermented fish sauce containing L-glutamic acid or the like, a seasoning prepared by pupae of silkworm together with unrefined soy sauce which are fermented and aged them and a seasoning prepared by producing and preparing a soy sauce *koji* after mixing malt with soybean or defatted soybean and carrying out fermentation and aging are reported (e.g., see Patent References 1 to 3). Additionally, a technique for improving taste of a soy sauce containing γ-aminobutyric acid with potassium is reported (e.g., see Patent Reference 4).

However, examinations regarding the stability of soy sauce qualities are not carried out in these related arts. Namely, when γ-aminobutyric acid is added to soy sauce at a high concentration for the purpose of obtaining further superior health functions, there is a problem that the pH rises in concentration-dependent manner due to the buffer activity possessed by itself to lower soy sauce qualities such as the stabilities regarding color and gloss, deliciousness, γ-aminobutyric acid content and the like.
Patent Reference 1: Japanese Patent No. 2704493
Patent Reference 2: JP-A-2006-34278
Patent Reference 3: JP-A-2005-323594
Patent Reference 4: JP-A-2006-136262
Non-patent Reference 1: "Summary of Permitted (Admitted) Items of Food for Specified Health Uses", Ministry of Health, Labor and Welfare, [online], February 27, 2006, [retrieval on June 15, 2006], internet <URL:http://www.mhlw.go.jp/topics/0102/xls/tp0221-2a.xls>

### DISCLOSURE OF THE INVENTION

### PROBLEMS TO BE SOLVED BY THE INVENTION

The problem of the present invention is to provide a soy sauce seasoning having high γ-aminobutyric acid content, in which qualities such as color and gloss, deliciousness, γ-aminobutyric acid content and the like are stabilized.

### MEANS FOR SOLVING THE PROBLEMS

In order to solve the above-mentioned problems, the inventors of the present invention have carried out intensive studies and found as a result that a soy sauce seasoning containing γ-aminobutyric acid in which qualities such as color and gloss, deliciousness, γ-aminobutyric acid content and the like are stabilized can be obtained when pH is adjusted within a certain range during allowing γ-aminobutyric acid to be contained in a soy sauce seasoning at a high concentration. Thus, the present invention was accomplished.

Namely, the present invention relates to:
(1) a soy sauce seasoning having high γ-aminobutyric acid content, which comprises from 0.5 to 5.0% (w/v) of γ-aminobutyric acid and has pH of from 4.7 to 5.0.

### EFFECT OF THE INVENTION

According to the present invention, a soy sauce seasoning having high γ-aminobutyric acid content, in which soy sauce qualities such as color and gloss, deliciousness, γ-aminobutyric acid content and the like are stabilized can be provided.

### BEST MODE FOR CARRYING OUT THE INVENTION

The following describes the present invention in detail.

As the soy sauce seasoning to be used as the base of the present invention, in addition to general soy sauce in which cereals are used as the ingredient, fermented fish sauce in which fish and shellfishes and the like are used as the ingredient, and processed soy sauce as their processed products, can be used.

According to the present invention, in order to obtain more superior health functions of γ-aminobutyric acid, γ-aminobutyric acid is added to the soy sauce seasoning at a high concentration of 0.5% (w/v) or more, preferably from 0.5 to 5.0% (w/v), more preferably from 1.5 to 5.0% (w/v). When the γ-aminobutyric acid content is less than 0.5% (w/v), a superior health function such as hypotensive activity cannot be obtained sufficiently. When the γ-aminobutyric acid content exceeds 5.0% (w/v) on the other hand, it is undesirable in terms of sensory and unsuitable as a soy sauce seasoning.

As the γ-aminobutyric acid to be added to the soy sauce seasoning in the present invention, a commercially available γ-aminobutyric acid powder, culture liquid of γ-aminobutyric acid which is obtained by various types of microbial fermentation and the like can be used. With regard to the addition of y-aminobutyric acid to the soy sauce seasoning, it can be added as such in the case of the culture liquid, while in the case of the powder, it is difficult to be uniformly mixed as such after its addition and it is desirable to add after dissolving in water or salt solution. Additionally, examples of the timing of adding γ-aminobutyric acid include the time of the standard adjustment by mixing the soy sauce seasoning or a processed soy sauce with salt water and various types of condiment, just before squeezing of the unrefined mixture of the soy sauce or a fermented fish sauce, just after squeezing of the unrefined mixture, and the like.

When preservative property of the soy sauce seasoning which contains γ-aminobutyric acid and obtained in this manner was examined, deep coloring of the color of soy sauce is considerably advanced when the amount of y-aminobutyric acid to be added is increased to 0.5% (w/v) or more, and distinct lowering of the qualities were also found by a sensory test. Additionally, stability reduction of the qualities as the soy sauce containing γ-aminobutyric acid, such as significant reduction even on the γ-aminobutyric acid content, was confirmed. When pH of the soy sauce seasoning to which γ-aminobutyric acid was added at a high concentration was measured for the purpose of searching for the cause of this stability reduction of qualities, it was confirmed that the pH rises in a concentration-dependent manner by the buffer action of γ-aminobutyric acid.

Accordingly, based on the assumption that the rise in pH is the cause of the stability reduction of the qualities, an examination was carried out on the possibility of improving the stability by lowering the pH with acidulants such as lactic acid, citric acid, acetic acid and the like. As a result, it was found that the stability of qualities is improved by adjusting the pH in the soy sauce seasoning containing γ-aminobutyric acid at a high concentration of from 0.5 to 5.0% (w/v) to be 5.0 or less. On the other hand, although it was found that similar effect of the stability improvement of qualities can be obtained even at a pH of less than 4.7, it is no longer usable as a soy sauce seasoning since strong acidity is felt. Based on the above reasons, it was decided that the pH suited for the quality stability of the soy sauce seasoning containing from 0.5 to 5.0% (w/v) of y-aminobutyric acid is from 4.7 to 5.0. Thus, it was decided that the pH in the present invention is adjusted within the range.

The adjustment of pH according to the present invention is carried out by adding acidulants to the soy sauce seasoning containing γ-aminobutyric acid. As the acidulants and the like, organic acids such as lactic acid, citric acid, acetic acid, tartaric acid, glacial acetic acid, malic acid and the like and salts thereof can be used. It is preferable to use lactic acid, citric acid or acetic acid, or a sodium salt thereof, which has less influence on the sensory.

In spite of the high γ-aminobutyric acid content, qualities such as color and gloss, deliciousness, γ-aminobutyric acid content and the like are stabilized in the soy sauce seasoning of the present invention having high γ-aminobutyric acid content obtained by the above-mentioned manner.

Although the following describes the present invention in detail with reference to examples, the present invention is not limited thereby.

### EXAMPLE 1

### <Rise of soy sauce pH by the addition of γ-aminobutyric acid>

By adding γ-aminobutyric acid powder (manufactured by Ajinomoto Healthy Supply) to commercially available Koikuchi soy sauce and Usukuchi soy sauce (manufactured by Kikkoman Corporation), changes in pH were observed (Table 1). It was found that the pH of soy sauce rises according to increase in the γ-aminobutyric acid content, and the pH becomes 5.0 or more in each of the soy sauce when the content becomes 0.5% (w/v) or more.

**Table 1**

| γ-Aminobutyric acid content (% (w/v)) | pH of Koikuchi soy sauce | pH of Usukuchi soy sauce |
|---|---|---|
| 0.0 | 4.90 | 4.87 |
| 0.2 | 4.95 | 4.93 |
| 0.4 | 4.98 | 4.98 |
| 0.5 | 5.00 | 5.00 |
| 0.6 | 5.01 | 5.02 |
| 0.8 | 5.03 | 5.06 |
| 1.0 | 5.06 | 5.10 |
| 1.2 | 5.08 | 5.13 |
| 1.4 | 5.11 | 5.15 |
| 1.6 | 5.13 | 5.18 |
| 1.8 | 5.15 | 5.21 |
| 2.0 | 5.17 | 5.25 |
| 3.0 | 5.25 | 5.33 |
| 4.0 | 5.32 | 5.47 |
| 5.0 | 5.43 | 5.53 |

### EXAMPLE 2

### <Comparison of influences of different pH values on soy sauce color and gloss and sensory at the time of oxidation>

By adding a γ-aminobutyric acid powder (manufactured by Ajinomoto Healthy Supply) to commercially available Koikuchi soy sauce and Usukuchi soy sauce (manufactured by Kikkoman Corporation), the soy sauces as described in the tests sections in Table 2 were prepared and subjected to a color and gloss stability test and sensory test.

In color and gloss stability test, 15 mL of each soy sauce was put into an L-tube and shaken for 8 hours under a condition of 40°C (corresponds to 1 month of preservation at room temperature in a PET bottle) to accelerate oxidation, and its color and gloss was compared with that before commencement of the test, based on the CIE 1976 L*a*b* color difference formula. Regarding the evaluation of color difference (ΔE), in accordance with the "Color Conditioning Method" edited by Suga Test Instruments Co., Ltd. (1977), the test section showing a color difference of less than 1.5, which is within such a range that the color difference was hardly detectable, was judged as "○", while the test section showing a color difference of 1.5 or more, which was equal to or larger than the detectable color difference, was judged as "×". Regarding the results of sensory test, the Koikuchi soy sauce or Usukuchi soy sauce to which the γ-aminobutyric acid powder was not added was used as the control, and those which were significantly identified by a three point identification method were judged as "×", and those which were not identified were judged as "○" (Table 1).

As a result, it was confirmed that the quantities regarding color and gloss and deliciousness are stable in the case of the inventive articles in which the pH was adjusted at from 4.7 to 5.0, in comparison with the pH-unadjusted control articles.

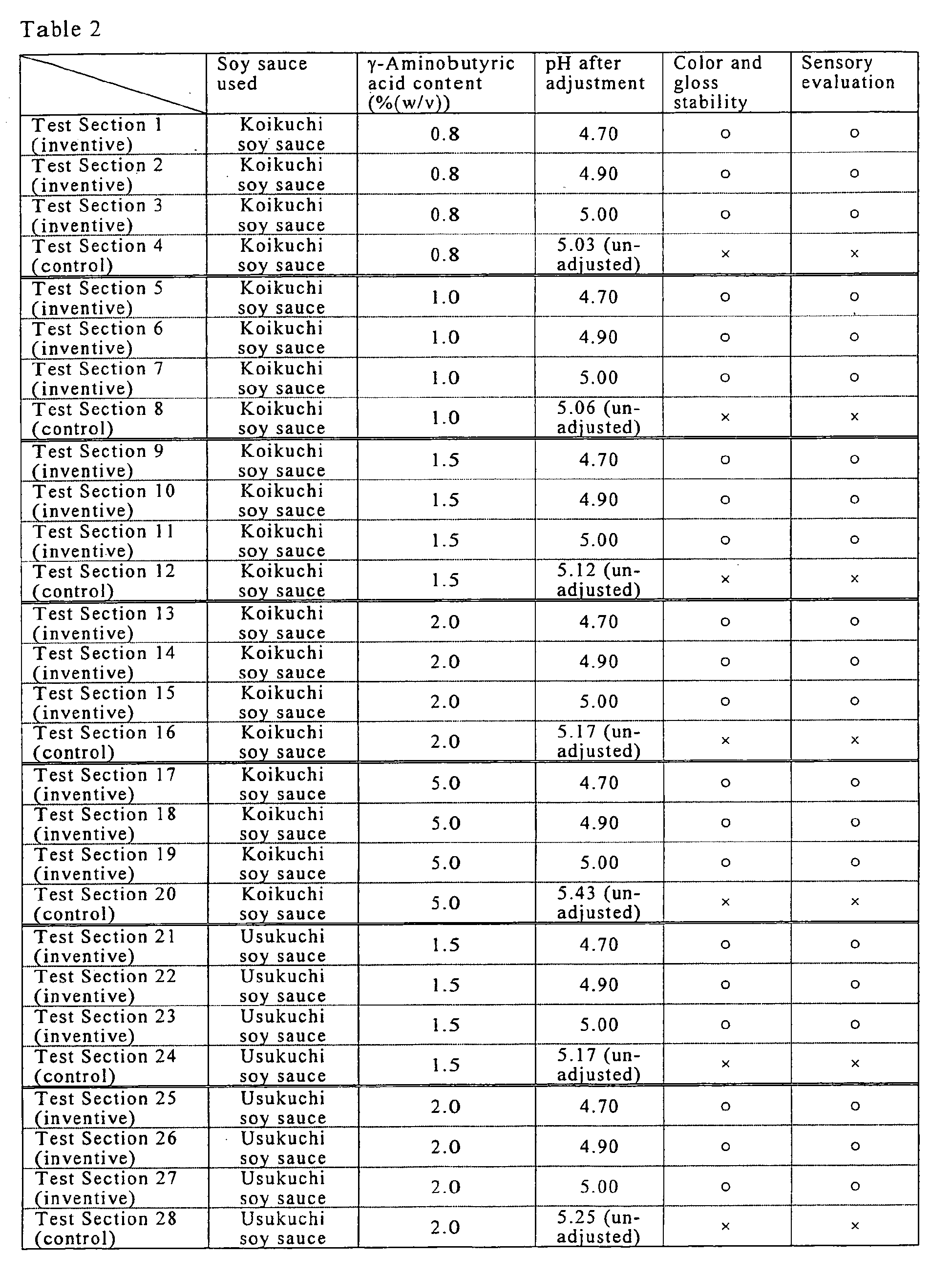

### EXAMPLE 3

### <Influence of different pH values on the stability of γ-aminobutyric acid>

Each of the Test Section 9 (inventive article), Test Section 12 (control article), Test Section 21 (inventive article) and Test Section 24 (control article) subjected to the test of Example 2 was preserved at 40°C for 2 weeks (corresponds to 1.5 months of preservation at room temperature in a PET bottle), and the γ-aminobutyric acid content was measured using a Hitachi high performance automatic amino acid analyzer, Model L-8500. The γ-aminobutyric acid content before preservation was defined as 100% and comparison of the residual ratios of the γ-aminobutyric acid content after preservation was carried out. As a result, it was confirmed that the quality of the articles of the present invention regarding the γ-aminobutyric acid content is stable, since they have higher residual ratio in comparison with the control articles (Table 3).

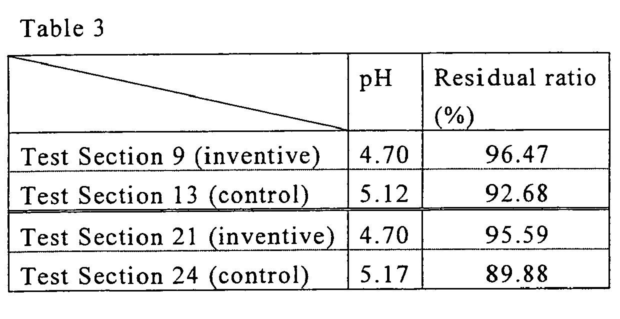

Although the present invention has been described in detail with reference to specific examples in the foregoing, it is apparent to person skilled in the art that it is possible to add various alterations and modifications insofar as the alterations and the modifications do not deviate from the sprit and scope of the present invention.

This patent application is based on Japanese Patent Application No. 2006-166846 filed on June 16, 2006, and the contents thereof are incorporated herein by reference. Additionally, references cited herein are incorporated as a whole.

### INDUSTRIAL APPLICABILITY

According to the present invention, a soy sauce seasoning having high γ-aminobutyric acid content, in which soy sauce qualities such as color and gloss, deliciousness, γ-aminobutyric acid content and the like are stabilized can be provided.

## Claims

1. A soy sauce seasoning having high γ-aminobutyric acid content, which comprises from 0.5 to 5.0% (w/v) of γ-aminobutyric acid and has pH of from 4.7 to 5.0.
